# EUROPEAN PATENT APPLICATION

(11) **EP 4 657 657 A1**
(43) Date of publication of application: **03.12.2025**
(21) Application number: 24764188.9
(22) Date of filing: 28.02.2024
(51) Int. Cl.: H01Q 1/38, H01Q 1/24, H01Q 1/22, H04M 1/02, H03H 7/01

(54) **ELECTRONIC DEVICE COMPRISING ANTENNA**

(30) Priority: 28.02.2023 KR 20230026740; 28.04.2023 KR 20230056531
(71) Applicant: Samsung Electronics Co., Ltd., Suwon-si, Gyeonggi-do 16677 (KR)
(72) Inventor: SONG, Keumsu, Suwon-si, Gyeonggi-do 16677 (KR); LEE, Hyungjoo, Suwon-si, Gyeonggi-do 16677 (KR)
(74) Representative: HGF
(86) International application number: PCT/KR2024/002564
(87) International publication number: WO 2024/181789

(57) **Abstract**

An electronic device according to one embodiment of the present invention comprises: a housing including a first plate and a second plate; a side member; a display; a printed circuit board; an NFC circuit; and a processor. The side member comprises: a first metal frame; a second metal frame; a first insulation member disposed between the first metal frame and the second metal frame; and a support member which forms a first loop with the first metal frame and a second loop with the second metal frame, and supports the display and the printed circuit board. The NFC circuit is electrically connected to the first loop, and the second loop can be electrically connected to a first reactive load circuit.

## Description

### [Technical Field]

The disclosure relates to an electronic device including antennas.

### [Background Art]

Near-field communication (NFC) is widely used for contactless payment, access control, etc., and NFC functions are being provided in not only mobile devices such as smartphones, tablet PCs, portable multimedia players (PMPs), personal digital assistants (PDAs), or laptop PCs, but also wearable devices such as wrist watches and head-mounted displays (HMDs).

Electronic devices implement card emulation and point-of-sale (POS) functions using NFC, enabling convenient financial transactions between consumers and merchants through NFC between electronic devices without separate NFC POS.

NFC is a short-range communication method using a 13.56 MHz carrier frequency, and a loop antenna may be used as an antenna for transmitting signals in NFC.

### [Disclosure of Invention]

### [Technical Problem]

An electronic device including an antenna according to an embodiment of the disclosure may utilize a metal frame included in the electronic device as an NFC antenna.

### [Solution to Problem]

An electronic device including an antenna according to an embodiment of the disclosure may include a housing including a first plate facing a first direction, a second plate facing a second direction opposite to the first direction, and a side member surrounding at least a portion of a space between the first plate and the second plate, a display disposed inside the housing and exposed through the first plate, a printed circuit board disposed inside the housing and disposed between the display and the second plate, an NFC circuit disposed inside the housing and connected to the printed circuit board, and a processor.

The side member according to an embodiment of the disclosure may include a first metal frame, a second metal frame sharing a ground with the first metal frame, a first insulation member disposed between the first metal frame and the second metal frame, and a support member configured to form a first loop with the first metal frame, form a second loop with the second metal frame, and support the display and the printed circuit board, and the NFC circuit may be electrically connected to the first loop, and the second loop may be electrically connected to the first reactive load circuit.

### [Advantageous Effects of Invention]

An electronic device including an antenna according to an embodiment of the disclosure may expand the coverage of an NFC antenna by utilizing a metal frame included in the electronic device as an NFC antenna.

### [Brief Description of Drawings]

In connection with the description of the drawings, the same or similar reference numerals will be used for the same or similar components.
FIG. 1 is a block diagram of an electronic device in a network environment according to various embodiments.
FIG. 2 is a perspective view illustrating the front surface of an electronic device according to an embodiment.
FIG. 3 is a perspective view illustrating the rear side of the electronic device in FIG. 2 according to an embodiment.
FIG. 4 is an exploded view of the electronic device in FIG. 2 according to an embodiment.
FIG. 5A is a diagram illustrating at least a portion of a side member and a first support member of an electronic device according to an embodiment of the disclosure.
FIG. 5B is a diagram illustrating surface current distributions in the side member and the first support member of the electronic device according to FIG. 5A.
FIG. 5C is a diagram illustrating a case where another electronic device including a point-of-sale (POS) and/or NFC circuit is in proximity to area C of an electronic device according to an embodiment of the disclosure.
FIG. 5D is a diagram illustrating a case where another electronic device including a point-of-sale (POS) and/or NFC circuit is in proximity to area B of an electronic device according to an embodiment of the disclosure.
FIG. 5E is a diagram illustrating a case where another electronic device including a point-of-sale (POS) and/or NFC circuit is in proximity to area A of an electronic device according to an embodiment of the disclosure.
FIG. 5F is a diagram illustrating an electronic device that does not include a reactive load circuit.
FIG. 6A is a diagram schematically illustrating the side member and the first support member in FIG. 5 according to an embodiment of the disclosure.
FIG. 6B illustrates a reactive load circuit including a single capacitor.
FIG. 6C illustrates a reactive load circuit including a single inductor.
FIG. 6D illustrates a reactive load circuit including a single capacitor and a single inductor connected in parallel.
FIG. 6E illustrates a reactive load circuit including a single capacitor and a single inductor connected in series.
FIG. 7 is a schematic diagram of a side member and a first support member of an electronic device according to an embodiment of the disclosure.
FIG. 8 is a schematic diagram of a side member and a first support member of an electronic device according to an embodiment of the disclosure.
FIG. 9 is a schematic diagram of a side member and a first support member of an electronic device according to an embodiment of the disclosure.
FIG. 10 is a diagram illustrating at least a portion of a side member and a first support member of an electronic device according to an embodiment of the disclosure.
FIG. 11 is a schematic diagram of the side member and the first support member in FIG. 10 according to an embodiment of the disclosure.
FIG. 12 is a schematic diagram of a side member and a first support member of an electronic device according to an embodiment of the disclosure.
FIG. 13 is a schematic diagram of a side member and a first support member of an electronic device according to an embodiment of the disclosure.

### [Mode for the Invention]

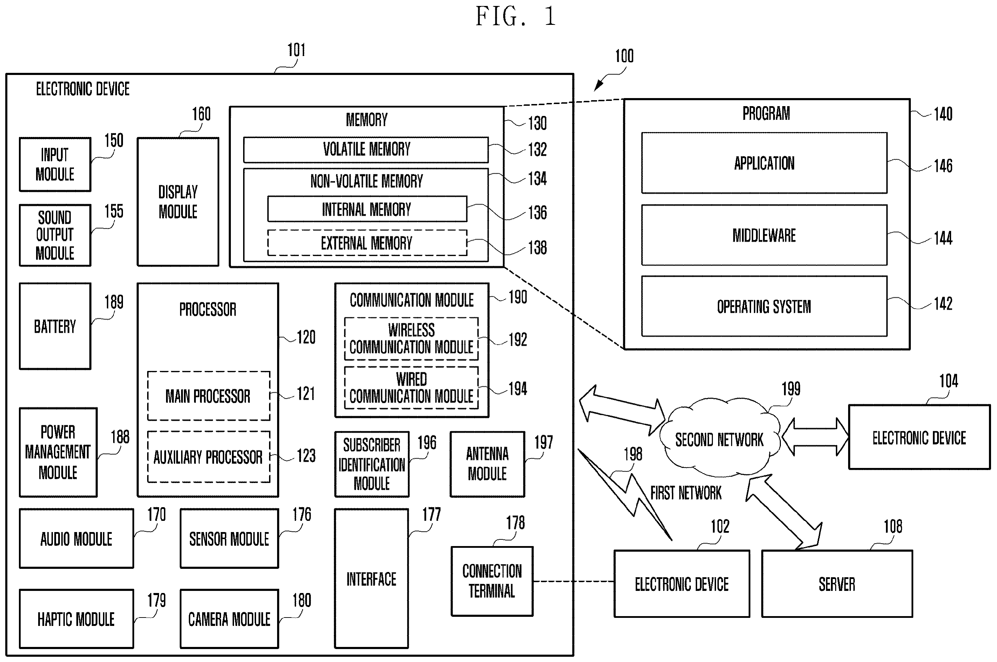

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

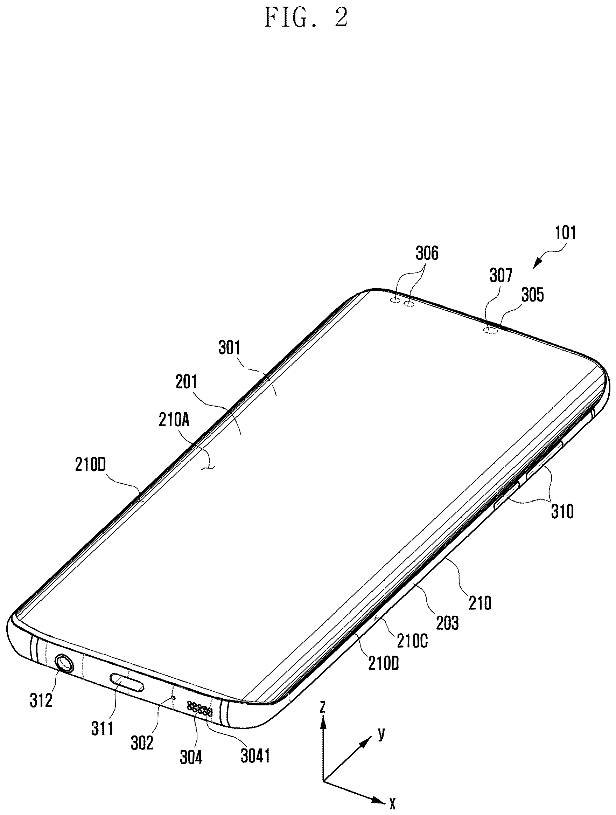

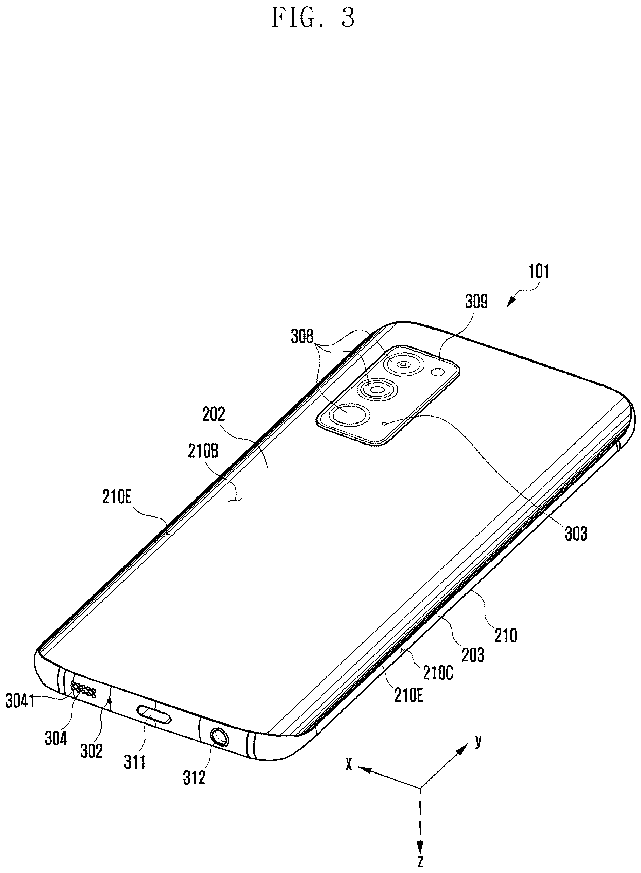

FIG. 2 is a perspective view illustrating the front surface of an electronic device 101 according to an embodiment. FIG. 3 is a perspective view illustrating the rear side of the electronic device 101 in FIG. 2 according to an embodiment.

Referring to FIGS. 2 and 3, in an embodiment, an electronic device 101 (e.g., the electronic device 101 in FIG. 1) may include a housing 210 including a first surface (or front surface) 210A, a second surface (or rear surface) 210B, and a side surface 210C surrounding a space between the first surface 210A and the second surface 210B. In some embodiments, the housing 210 may refer to a structure forming at least a portion of the first surface 210A, the second surface 210B, and the side surface 210C. The first surface 210A may be configured as a front plate (or first plate) 201 (e.g., a glass plate or polymer plate including various coating layers) having at least a portion that is substantially transparent. The second surface 210B may be configured as a rear plate (or second plate) 202 that is substantially opaque. The rear plate 202 may be formed of, for example, coated or tinted glass, ceramic, polymer, metal (e.g., aluminum, stainless steel, or magnesium), or a combination of at least two of the above materials. The side surface 210C may be formed in a lateral bezel structure (or "side member") 203 that is coupled to the front plate 201 and the rear plate 202, and the lateral bezel structure may include metal and/or polymer. In some embodiments, the rear plate 202 and the lateral bezel structure 203 may be integrally formed, and may include the same material (e.g., a metal material).

In an embodiment, the front plate 201 may include two first regions 210D that extend from the first surface 210A toward the rear plate 202. The rear plate 202 may include two second regions 210E that extend from the second surface 210B toward the front plate 201.

In an embodiment, the electronic device 101 may include at least one of a display 301, a first audio module 302, a second audio module 303, a third audio module 304, a fourth audio module 305, a sensor module 306, a first camera module 307, a plurality of second camera modules 308, a light-emitting module 309, an input module 310, a first connection terminal module 311, or a second connection terminal module 312. In some embodiments, the electronic device 101 may exclude at least one of the above components or may further include other components.

In an embodiment, a display area (e.g., a screen display area or an active area) of the display 301 may be visually exposed, for example, through the front plate 201. In an embodiment, the electronic device 101 may be implemented to maximize the display area visible through the front plate 201 (e.g., a large screen or a full screen). For example, the display 301 may be implemented to have an outer shape substantially the same as that of the front plate 201. The display 301 may be the same as the display module 160 in FIG. 1.

In an embodiment, the first audio module 302 may include, for example, a first microphone located inside the electronic device 101, and a first microphone hole formed on the side surface 210C to correspond to the first microphone. The second audio module 303 may include, for example, a second microphone (or a second microphone module) located inside the electronic device 101, and a second microphone hole formed on the second surface 210B to correspond to the second microphone.

In an embodiment, the third audio module 304 may include, for example, a first speaker (or a first speaker module) located inside the electronic device 101, and a first speaker hole formed on the side surface 210C to correspond to the first speaker. The fourth audio module 305 may include, for example, a second speaker (or a second speaker module) located inside the electronic device 101, and a second speaker hole formed on the first surface 210A to correspond to the second speaker.

In an embodiment, the first speaker may include an external speaker. In an embodiment, the second speaker may include a call receiver, and the second speaker hole may be referred to as a receiver hole. The locations or number of the third audio modules 304 or fourth audio modules 305 is not limited to the illustrated example and may vary.

The sensor module 306 may generate an electrical signal or data value corresponding to, for example, an internal operating state of the electronic device 101 or an external environmental state. In an embodiment, the sensor module 306 may include an optical sensor located inside the electronic device 101 to correspond to the first surface 210A.

In an embodiment, the first camera module 307 (e.g., a front camera module) may be located inside the electronic device 101 to correspond to, for example, the first surface 210A. A plurality of second camera modules 308 (e.g., rear camera modules) may be located inside the electronic device 101 to correspond to, for example, the second surface 210B. The first camera module 307 and/or the plurality of second camera modules 308 may include one or more lenses, an image sensor, and/or an image signal processor. The locations or number of the first camera modules or the second camera modules is not limited to the illustrated example and may vary.

According to an embodiment, the plurality of second camera modules 308 may have different properties (e.g., angles of view) or functions, and may include, for example, dual cameras or triple cameras. The plurality of second camera modules 308 may include a plurality of camera modules including lenses having different angles of view, and the electronic device 101 may perform control to change the angles of view of the camera modules performed in the electronic device 101, based on a user's selection. The plurality of second camera modules 308 may include at least one of a wide-angle camera, a telephoto camera, a color camera, a monochrome camera, or an infrared (IR) camera (e.g., a time-of-flight (TOF) camera or a structured light camera). In some embodiments, the IR camera may be operated as at least a part of a sensor module. The light-emitting module 309 (e.g., a flash) may include a light source for the plurality of second camera modules 308. The light-emitting module 309 may include, for example, an LED or a xenon lamp.

In an embodiment, the input module 310 may include one or more key input devices. The one or more key input devices may be positioned, for example, in an opening formed on the side surface 210C. The electronic device 101 may exclude some or all of the key input devices, and the excluded key input devices may be implemented as soft keys using the display 301. The locations or number of the input modules 310 may vary, and in some embodiments, the input module 310 may include at least one sensor module.

In an embodiment, the first connection terminal module (e.g., a first connector module or a first interface terminal module) 311 may include, for example, a first connector (or a first interface terminal) located inside the electronic device 101, and a first connector hole formed on the side surface 210C to correspond to the first connector. The second connection terminal module (e.g., a second connector module or a second interface terminal module) 312 may include, for example, a second connector (or a second interface terminal) located inside the electronic device 101, and a second connector hole formed on the side surface 210C to correspond to the second connector. The electronic device 101 may transmit and/or receive power and/or data to and/or from an external electronic device electrically connected to the first connector or the second connector. In an embodiment, the first connector may include a universal serial bus (USB) connector or a high-definition multimedia interface (HDMI) connector. In an embodiment, the second connector may include an audio connector (e.g., a headphone connector or an earphones connector). The locations or number of the connection terminal modules is not limited to the illustrated example and may vary.

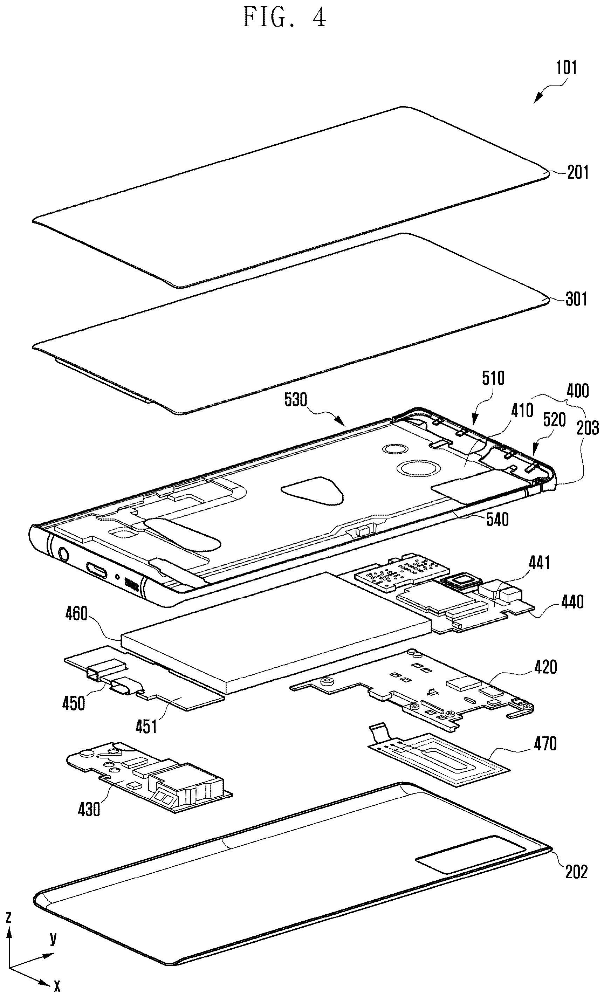

FIG. 4 is an exploded view of the electronic device 101 in FIG. 2 according to an embodiment.

Referring to FIG. 4, the electronic device 101 may include a front plate 201, a rear plate 202, a lateral bezel structure 203, a first support member 410, a second support member 420, a third support member 430, a display 301, a first substrate assembly 440, a second substrate assembly 450, a battery 460, or an antenna structure 470. In an embodiment, the electronic device 101 may exclude at least one (e.g., the second support member 420 or the third support member 430) of the above components or may further include other components.

In an embodiment, the first support member 410 may be located inside the electronic device 101, and may be connected to the lateral bezel structure 203 or formed integrally with the lateral bezel structure 203. The first support member 410 may be formed of, for example, a metal material and/or a non-metal material (e.g., polymer).

In an embodiment, a conductive portion included in the first support member 410 may serve as an electromagnetic shield for the display 301, the first substrate assembly 440, and/or the second substrate assembly 450.

In an embodiment, the configuration including the first support member 410 and the lateral bezel structure 203 may be referred to as a front case 400. The first support member 410 may be a portion of the front case 400 where components such as the display 301, the first substrate assembly 440, the second substrate assembly 450, or the battery 460 are disposed, and may contribute to the durability or rigidity (e.g., torsional rigidity) of the electronic device 101.

In an embodiment, the first support member 410 may be referred to as a support structure (e.g., a bracket or a mounting plate).

In an embodiment, the first support member 410 may support a metal frame included in the lateral bezel structure (or "side member") 203. The first support member 401 may include a slot in at least a portion thereof.

In an embodiment, the display 301 may be positioned between the support structure 410 and the front plate 201, and may be disposed on one surface of the support structure 410.

In an embodiment, the first substrate assembly 440 and the second substrate assembly 450 may be positioned between the support structure 410 and the rear plate 202, and may be disposed on the other surface of the support structure 410.

In an embodiment, the battery 460 may be positioned between the support structure 410 and the rear plate 202, and may be disposed in the support structure 410.

In an embodiment, the first substrate assembly 440 may include a first printed circuit board 441 (e.g., printed circuit board (PCB) or printed circuit board assembly (PBA)). The first substrate assembly 440 may include various electronic components electrically connected to the first printed circuit board 441. The electronic components may be disposed on the first printed circuit board 441, or may be electrically connected to the first printed circuit board 441 through an electrical path such as a cable or a flexible printed circuit board (FPCB).

In an embodiment, when viewed from above the front plate 201 (e.g., when viewed in the -z-axis direction), the second substrate assembly 450 may be disposed to be spaced apart from the first substrate assembly 440 with the battery 460 interposed therebetween. The second substrate assembly 450 may include a second printed circuit board 442 electrically connected to the first printed circuit board 441 of the first substrate assembly 440. The second substrate assembly 450 may include various electronic components electrically connected to the second printed circuit board 442. The electronic components may be disposed on the second printed circuit board 442, or may be electrically connected to the second printed circuit board 442 through an electrical path such as a cable or FPCB.

In an embodiment, the battery 460 may be integrally disposed inside the electronic device 101, and may be disposed to be attachable to and detachable from the electronic device 101.

In an embodiment, the second support member 420 may be positioned between the support structure 410 and the rear plate 202, and may be coupled to the support structure 410 using a fastening element such as a bolt. At least a portion of the first substrate assembly 440 may be positioned between the support structure 410 and the second support member 420, and the second support member 420 may cover and protect the first substrate assembly 440. When viewed from above the rear plate 202 (e.g., when viewed in the +z-axis direction), the third support member 430 may be positioned at least partially spaced apart from the second support member 420 with the battery 460 interposed therebetween. The third support member 430 may be positioned between the support structure 410 and the rear plate 202, and may be coupled to the support structure 410 using a fastening element such as a bolt. At least a portion of the second substrate assembly 450 may be positioned between the support structure 410 and the third support member 430, and the third support member 430 may cover and protect the second substrate assembly 450. The second support member 420 and/or the third support member 430 may be formed of a metal material and/or a non-metal material (e.g., polymer). In an embodiment, the second support member 420 may serve as an electromagnetic shield for the first substrate assembly 440, and the third support member 430 may serve as an electromagnetic shield for the second substrate assembly 450. In some embodiments, the second support member 420 and/or the third support member 430 may be referred to as a rear case.

According to some embodiments, an integrated substrate assembly including the first substrate assembly 440 and the second substrate assembly 450 may be implemented. For example, when viewed from above the rear plate 202 (e.g., when viewed in the +z-axis direction), the substrate assembly may include a first portion and a second portion positioned to be spaced apart from each other with the battery 460 interposed therebetween, and a third portion extending between the battery 460 and the lateral bezel structure 203 and connecting the first portion and the second portion. In this case, an integrated support member including the second support member 420 and the third support member 430 may be implemented.

According to an embodiment, the antenna structure 470 may be positioned between the second support member 420 and the rear plate 202. In some embodiments, the antenna structure 470 may be positioned between the battery 460 and the rear plate 202. The antenna structure 470 may be implemented, for example, in the form of a film such as an FPCB. The antenna structure 470 may include at least one conductive pattern utilized as a loop-type radiator. For example, at least one conductive pattern may include a flat spiral conductive pattern (e.g., a flat coil or a pattern coil). In an embodiment, at least one conductive pattern included in the antenna structure 470 may be electrically connected to a wireless communication circuit (or wireless communication module) included in the first substrate assembly 440. For example, at least one conductive pattern may be utilized for short-range wireless communication such as near-field communication (NFC). As another example, at least one conductive pattern may be utilized for magnetic secure transmission (MST) for transmitting and/or receiving magnetic signals.

In an embodiment, at least one conductive pattern included in the antenna structure 470 may be electrically connected to a power transmission/reception circuit included in the first substrate assembly 440. The power transmission/reception circuit may wirelessly receive power from an external electronic device or wirelessly transmit power to an external electronic device using at least one conductive pattern. The power transmission/reception circuit may include a power management module, and may include, for example, a power management integrated circuit (PMIC) or a charger integrated circuit (IC). The power transmission/reception circuit may charge the battery 460 using the power wirelessly received using the conductive pattern.

In an embodiment, the electronic device 101 may have a bar-type or plate-type appearance but is not limited thereto. For example, the illustrated electronic device 101 may be a part of a foldable electronic device, a slidable electronic device, a stretchable electronic device, and/or a rollable electronic device.

The electronic device 101 may further include various components according to its provision form. Although not all the components may be listed because they are subjected to various transformation according to the convergence trend of the electronic device 101, the components equivalent to the components mentioned above may be further included in the electronic device 101. In various embodiments, specific components may be excluded from the components mentioned above or replaced with other components depending on the provision form.

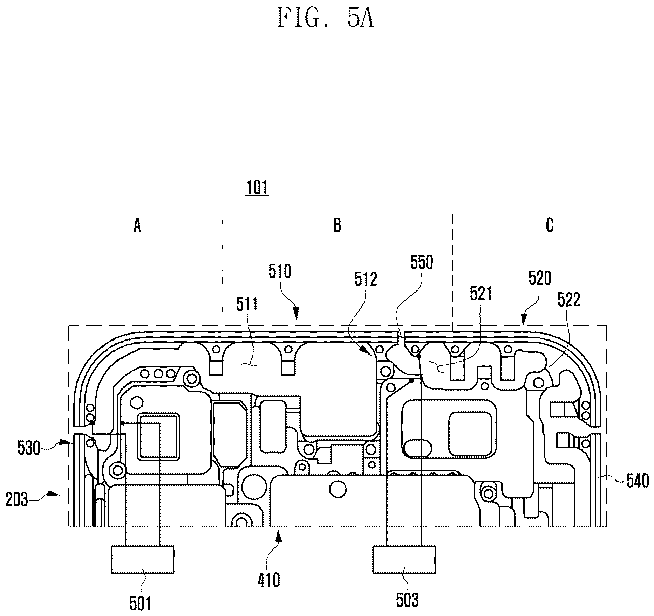

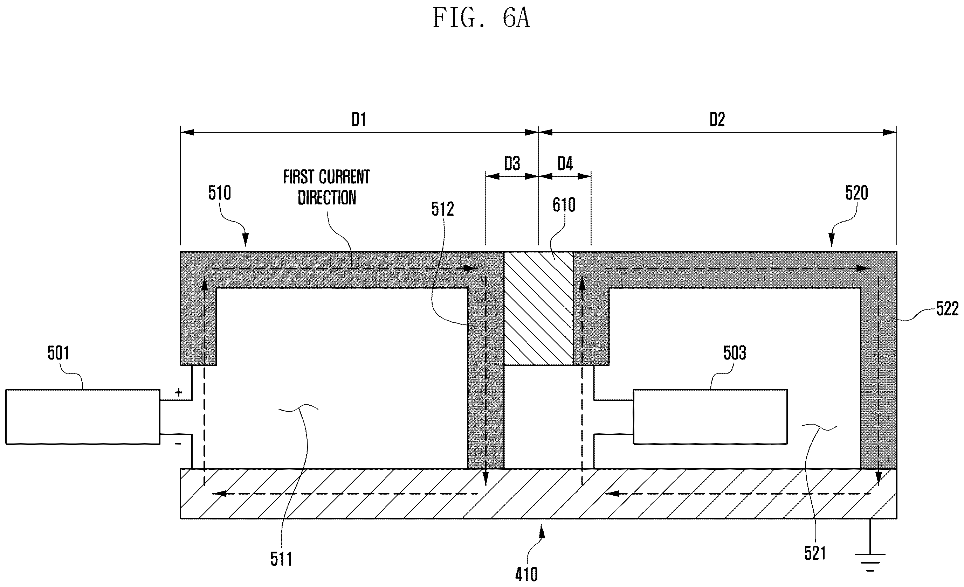

FIG. 5A is a diagram illustrating at least a portion of a side member 203 and a first support member 410 of an electronic device 101 according to an embodiment of the disclosure. FIG. 6A is a diagram schematically illustrating the side member 203 and the first support member 410 in FIG. 5A according to an embodiment of the disclosure.

Referring to FIGS. 5A and 6A, the side member 203 according to an embodiment may include a first metal frame 510, a second metal frame 520, a third metal frame 530, and/or a fourth metal frame 540.

In an embodiment, the first metal frame 510, the second metal frame 520, the third metal frame 530, and/or the fourth metal frame 540 may form the exterior of the electronic device 101. For example, the first metal frame 510, the second metal frame 520, the third metal frame 530, and/or the fourth metal frame 540 may be spaced apart from each other by a specified distance. An insulation member may be disposed in the gap of the specified distance. The first metal frame 510, the second metal frame 520, the third metal frame 530, and/or the fourth metal frame 540 may be used as antennas of the electronic device 101. For example, the first metal frame 510, the second metal frame 520, the third metal frame 530, and/or the fourth metal frame 540 may be connected to a power supply member, a communication circuit, a reactive load, and/or a ground.

In an embodiment, the first metal frame 510 may be spaced apart from the second metal frame 520 by a first segment 550. The first segment 550 may have an insulation member (e.g., the insulation member 610 in FIG. 6A) disposed therein. The insulation member 610 may be, for example, a dielectric. The insulation member 610 in FIG. 6A may be a non-conductive injection-molded material filled in the first segment 550.

In an embodiment, the first support member 410 may include a first slot 511 and a second slot 521. For example, the first slot 511 may correspond, at least in part, to the shape of the electronic component (e.g., the processor 120) disposed on the first substrate assembly 440. However, it is not limited thereto, and the first slot 511 may be formed to implement an antenna, and at least a portion of the first slot 511 may not correspond to the shape of the electronic component (e.g., the processor 120) disposed on the first substrate assembly 440.

In an embodiment, at least a portion of the first metal frame 510 may be electrically and physically connected to the first support member 410. For example, the first metal frame 510 may be electrically and physically connected to the first support member 410 via a first connection member 512.

In an embodiment, when the first support member 410 is manufactured, the first metal frame 510, the first slot 511, the first connection member 512, and the first support member 410 may be formed integrally.

In an embodiment, the first metal frame 510 may be connected to the NFC circuit 501. The NFC circuit 501 may be connected to a feeding line. The NFC circuit 501 may be connected to the first metal frame 510 via the feeding line. The NFC circuit 501 may be connected to the first support member 410 via a ground line. In an embodiment, the NFC circuit 501 may further include a matching circuit between an NFC integrated circuit (IC) and each connection.

In an embodiment, the current or signal transmitted through the feeding line of the NFC circuit 501 may flow to the first metal frame 510, the first connection member 512, and the first support member 410.

In an embodiment, the NFC circuit 501 may form a closed loop with the first metal frame 510, the first connection member 512, and the first support member 410.

In an embodiment, the NFC circuit 501 may form a first loop with the first metal frame 510, the first connection member 512, and the first support member 410.

In an embodiment, the second metal frame 520 may be spaced apart from the first metal frame 520 by the first segment 550.

In an embodiment, the second slot 521 may correspond, at least in part, to the shape of the electronic component disposed on the first substrate assembly 440.

In an embodiment, at least a portion of the second metal frame 520 may be electrically and physically connected to the first support member 410. For example, the second metal frame 520 may be electrically and physically connected to the first support member 410 via a second connection member 522.

In an embodiment, when the first support member 410 is manufactured, the second metal frame 520, the second slot 521, the second connection member 522, and the first support member 410 may be formed integrally.

In an embodiment, the second metal frame 520 may be connected to a reactive load circuit 503. The reactive load circuit 503 may perform an operation such that the current flowing in the second metal frame 520 flows in the same direction (e.g., first current direction) as the current flowing in the first metal frame 510.

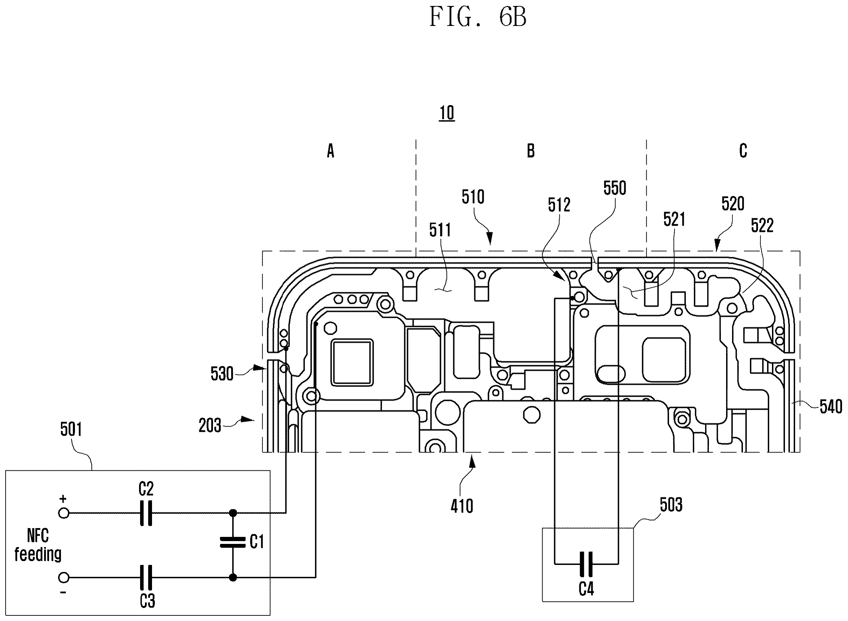

FIG. 6B illustrates a reactive load circuit 503 including a single capacitor.

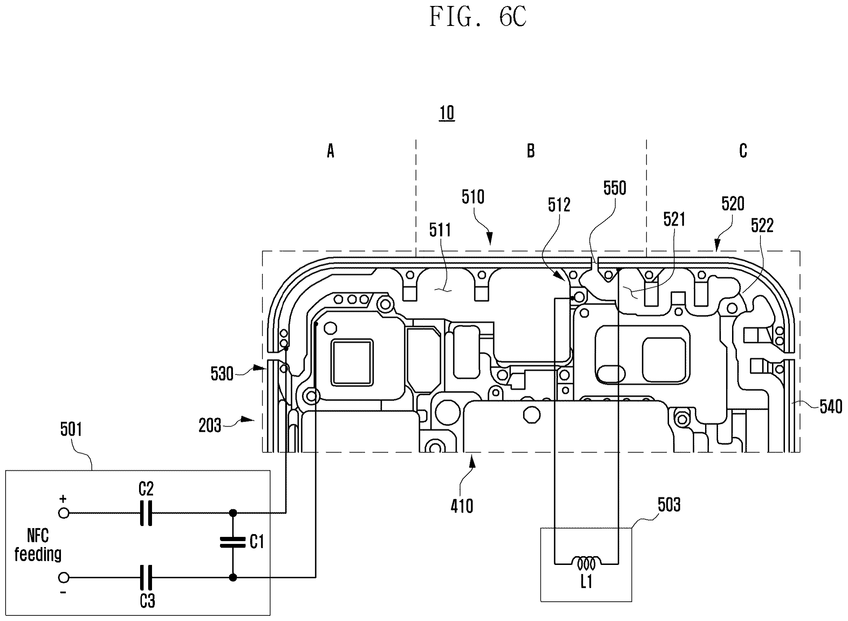

FIG. 6C illustrates a reactive load circuit 503 including a single inductor.

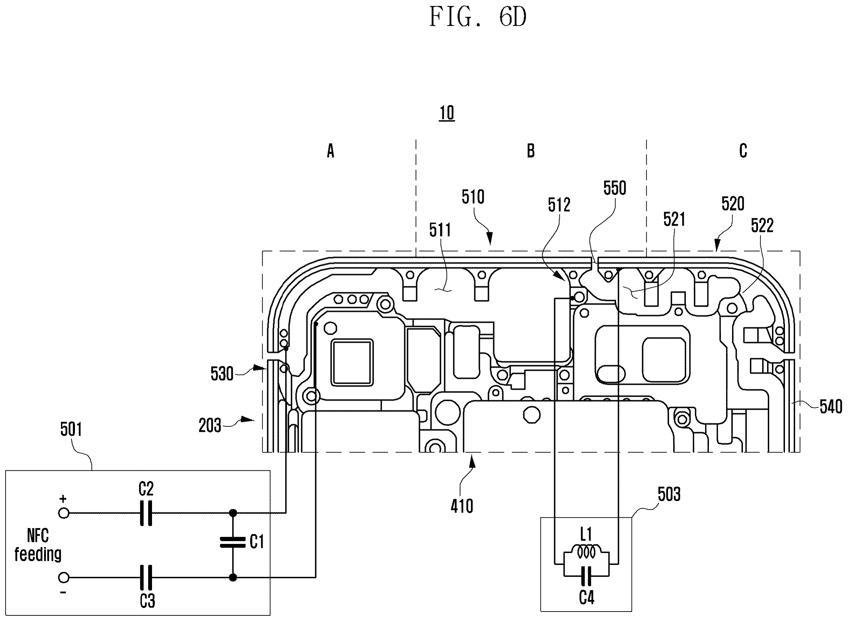

FIG. 6D illustrates a reactive load circuit 503 including a single capacitor and a single inductor connected in parallel.

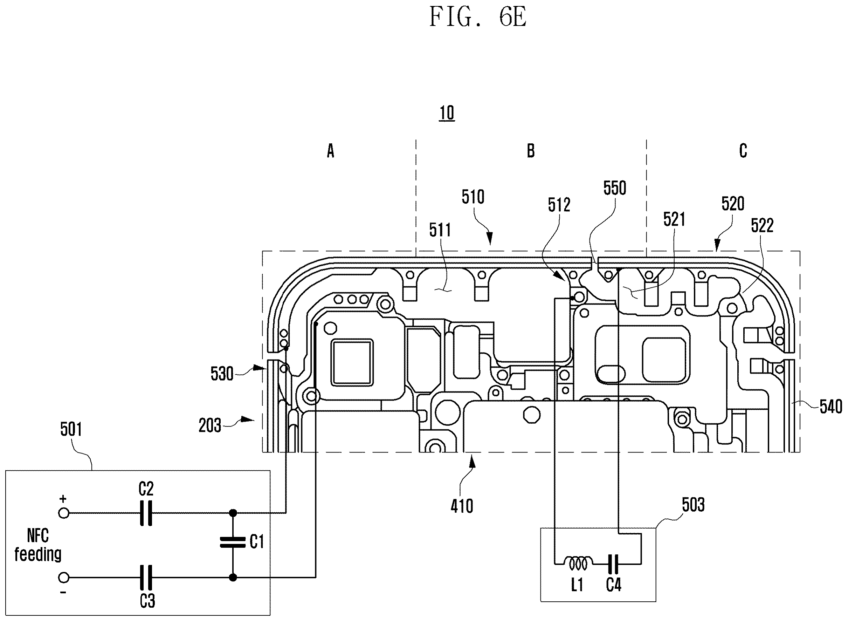

FIG. 6E illustrates a reactive load circuit 503 including a single capacitor and a single inductor connected in series.

Referring to FIGS. 6B, 6C, 6D, and 6E, the reactive load circuit 503 may include a single capacitor, a plurality of capacitors, a single inductor, a plurality of capacitors, a single or plurality of capacitors and a single or plurality of inductors connected in series, or a single or plurality of capacitors and a single or plurality of inductors connected in parallel.

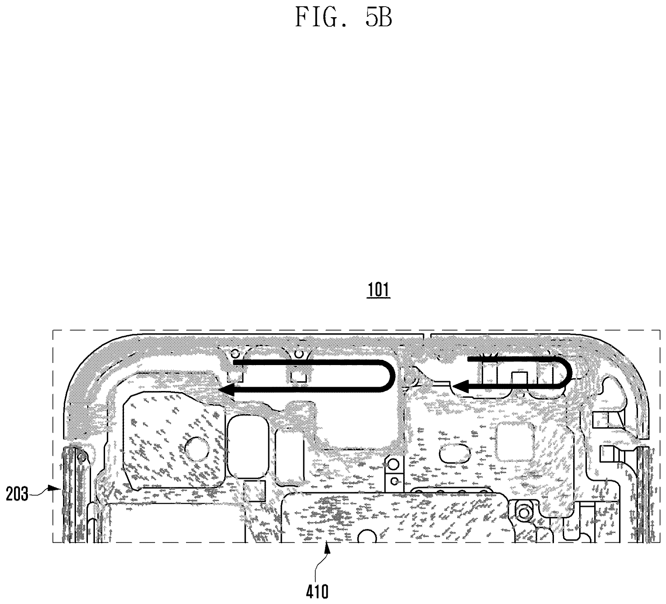

FIG. 5B is a diagram illustrating surface current distributions in the side member 203 and the first support member 410 of the electronic device 101 according to FIG. 5A.

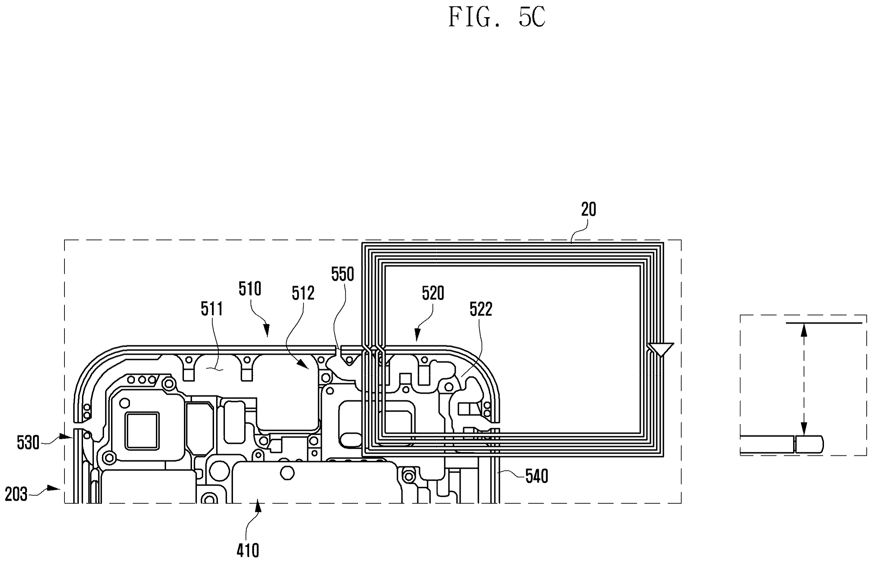

FIG. 5C is a diagram illustrating a case where another electronic device 20 including a point-of-sale (POS) and/or NFC circuit is in proximity to area C of an electronic device 101 according to an embodiment of the disclosure.

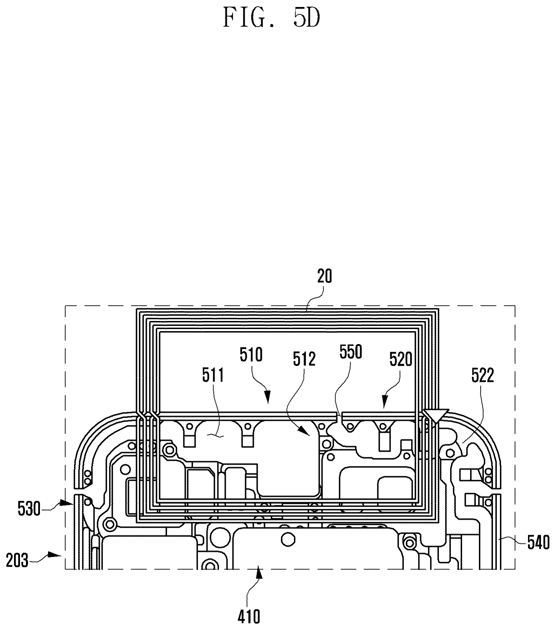

FIG. 5D is a diagram illustrating a case where another electronic device 20 including a point-of-sale (POS) and/or NFC circuit is in proximity to area B of an electronic device 101 according to an embodiment of the disclosure.

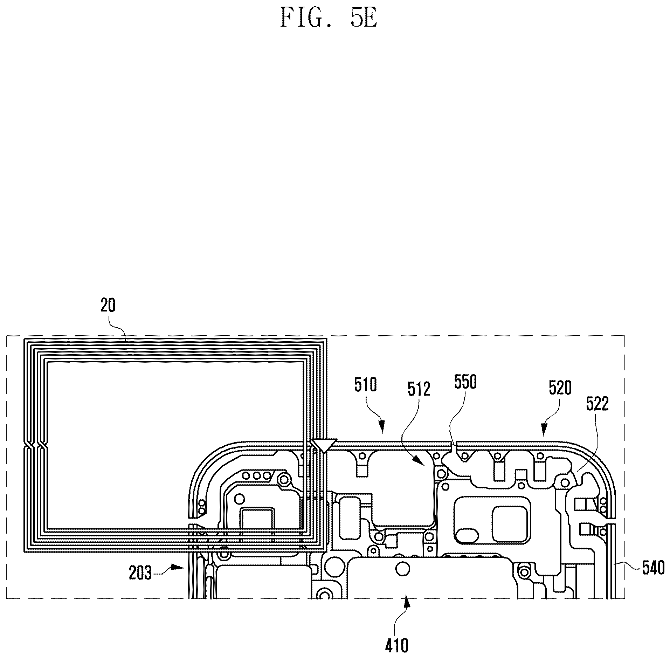

FIG. 5E is a diagram illustrating a case where another electronic device 20 including a point-of-sale (POS) and/or NFC circuit is in proximity to area A of an electronic device 101 according to an embodiment of the disclosure.

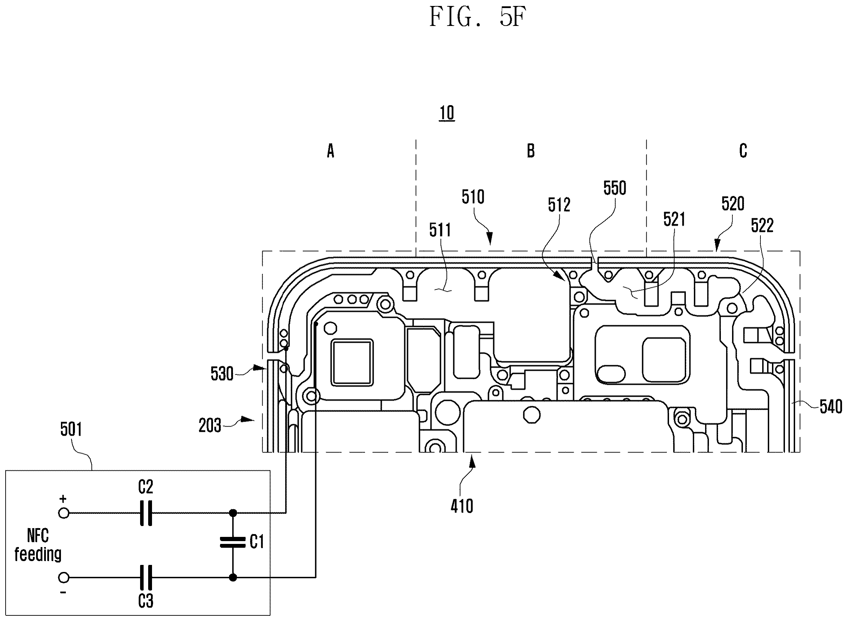

FIG. 5F is a diagram illustrating an electronic device 10 that does not include a reactive load circuit.

Table 1 shows S21 of an NFC antenna according to a reactive load circuit 503 when another electronic device 20 including a point-of-sale (POS) and/or NFC circuit is in proximity to area A, area B, and area C of an electronic device 101 according to an embodiment of the disclosure.

**[Table 1]**

| Type of reactive load | S21 [dB] | | |
|---|---|---|---|
| | When location of POS is in area A | When location of POS is in area B | When location of POS is in area C |
| When there is no reactive load | -5.8 | -5.3 | -8.9 |
| Single capacitor | -6.2 | -4.6 | -6.5 |
| Single inductor | -5.6 | -5.1 | -8.2 |
| Single capacitor and single inductor connected in parallel | -6.2 | -4.6 | -6.5 |
| Single capacitor and single inductor connected in series | -6.2 | -4.6 | -6.5 |

Referring to Table 1, FIGS. 5A, 5C, 5D, 5E, and 5F, the electronic device 101 including a reactive load circuit according to an embodiment of the disclosure has increased the NFC antenna efficiency, compared to the electronic device excluding a reactive load circuit. Referring to FIGS. 5C, 5D, 5E, and 5F, Table 1 illustrates the antenna efficiency measured when another electronic device 20 including a point-of-sale (POS) and/or NFC circuit approaches area A, area B, and area C of the electronic device 101 according to an embodiment of the disclosure, respectively, at an arbitrary distance (e.g., about 5 cm). In an embodiment, the reactive load circuit 503 may have at least one power line connected to the second metal frame 520, and at least one power line connected to the first support member 410.

In an embodiment, the reactive load circuit 503 may act as a filter for the current or signal flowing through the NFC circuit 501.

In an embodiment, the current or signal generated by the first metal frame 510 may be reconfigured by the reactive load circuit 503, and may flow to the second metal frame 520. The reactive load circuit 503 may be connected to the second metal frame 520, and coupling may occur between the first metal frame 510 and the second metal frame 520.

Referring to FIG. 5B, the current or signal generated by the first metal frame 510 may be reconfigured by the reactive load circuit 503, and may flow to the second metal frame 520.

In an embodiment, the reactive load circuit 503 may form a closed loop with the second metal frame 520, the second connection member 522, and the first support member 410.

In an embodiment, the reactive load circuit 503 may form a second loop with the second metal frame 520, the second connection member 522, and the first support member 410. In an embodiment, the first support member 410 may act as a ground.

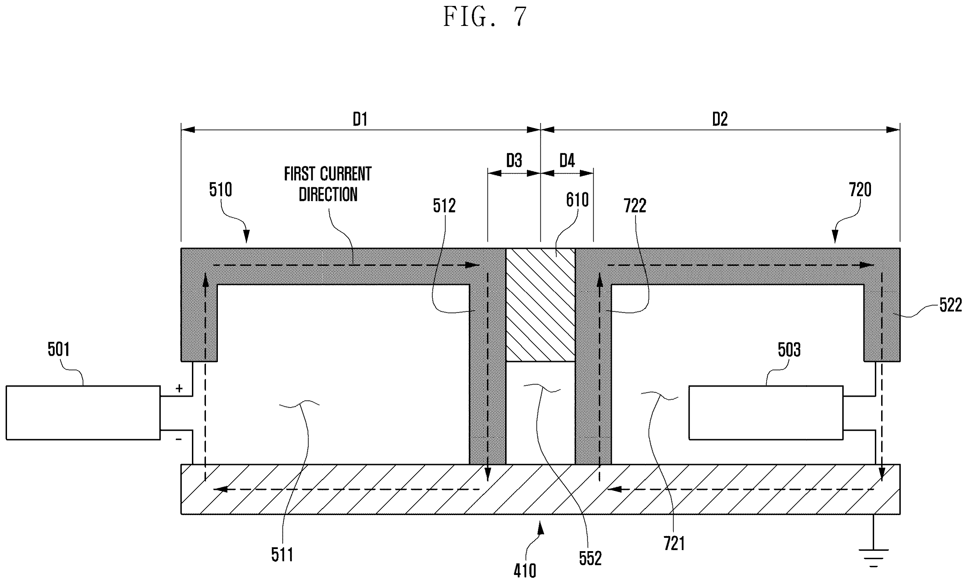

FIG. 7 is a schematic diagram of a side member 203 and a first support member 410 of an electronic device 101 according to an embodiment of the disclosure.

The difference between FIG. 7 and FIG. 6A will be described below based on the insulation member 610.

Referring to FIG. 6A, the point at which the NFC circuit 501 is connected to the first metal frame 510 may be located at a first distance D1 from the insulation member 610. The point at which the reactive load circuit 503 is connected to the second metal frame 520 may be located at a fourth distance D4 from the insulation member 610. The reactive load circuit 503 may be disposed adjacent to the insulation member 610.

Referring to FIG. 7, the point at which the NFC circuit 501 is connected to the first metal frame 510 may be located at a first distance D1 from the insulation member 610. The point at which the reactive load circuit 503 is connected to the fifth metal frame 720 may be located at a second distance D2 from the insulation member 610. The point at which the reactive load circuit 503 is connected to the fifth metal frame 720 in FIG. 7 may be at a further distance from the insulation member 610 than the point at which it is connected to the second metal frame 520 in FIG. 6A.

In an embodiment, the first metal frame 510 may be spaced apart from the fifth metal frame 720 by a specified segment (e.g., the first segment 550). The insulation member 610 may be disposed in the first segment 550. For example, the insulation member 610 may be a dielectric.

In an embodiment, the first support member 410 may include a first slot 511 and a third slot 721. The first slot 511 may correspond, at least in part, to the shape of the electronic component (e.g., the processor 120) disposed on the first substrate assembly 440.

The first metal frame 510 in FIG. 7 may be substantially the same as the first metal frame 510 in FIG. 6A. However, it is not limited thereto, and the specific shape may differ.

In an embodiment, the first metal frame 510 may be connected to the NFC circuit 501. The first metal frame 510 may be connected to the feeding line of the NFC circuit 501. The NFC circuit 501 may be connected to the first metal frame 510 through the feeding line. The NFC circuit 501 may be connected to the first support member 410 through the ground line.

In an embodiment, the current or signal transmitted through the feeding line of the NFC circuit 501 may flow to the first metal frame 510, the first connection member 512, and the first support member 410.

In an embodiment, the NFC circuit 501 may form a closed circuit with the first metal frame 510, the first connection member 512, and the first support member 410.

In an embodiment, the fifth metal frame 720 may be spaced apart from the first metal frame 510 by the first segment 550.

In an embodiment, the third slot 721 may correspond, at least in part, to the shape of the electronic component disposed on the first substrate assembly 440.

In an embodiment, at least a portion of the fifth metal frame 720 may be electrically and physically connected to the first support member 410. The fifth metal frame 720 may be electrically and physically connected to the first support member 410 via a third connection member 722.

In an embodiment, when the first support member 410 is manufactured, the fifth metal frame 720, the third slot 721, the third connection member 722, and the first support member 410 may be formed integrally.

In an embodiment, the fifth metal frame 720 may be connected to the reactive load circuit 503. The reactive load circuit 503 may perform an operation such that the current flowing in the fifth metal frame 720 flows in the same direction (e.g., first current direction) as the current flowing in the first metal frame 510.

In an embodiment, the reactive load circuit 503 may include a single capacitor, a single inductor, a single capacitor and a single inductor connected in series, or a single capacitor and a single inductor connected in parallel.

In an embodiment, the reactive load circuit 503 may have at least one power line connected to the fifth metal frame 720, and at least one power line connected to the first support member 410.

In an embodiment, the reactive load circuit 503 may act as a filter for the current or signal flowing through the NFC circuit 501.

In an embodiment, the current or signal transmitted through at least one power line of the reactive load circuit 503 may flow to the fifth metal frame 720, the third connection member 722, and the first support member 410.

In an embodiment, the reactive load circuit 503 may form a closed loop with the fifth metal frame 720, the third connection member 722, and the first support member 410.

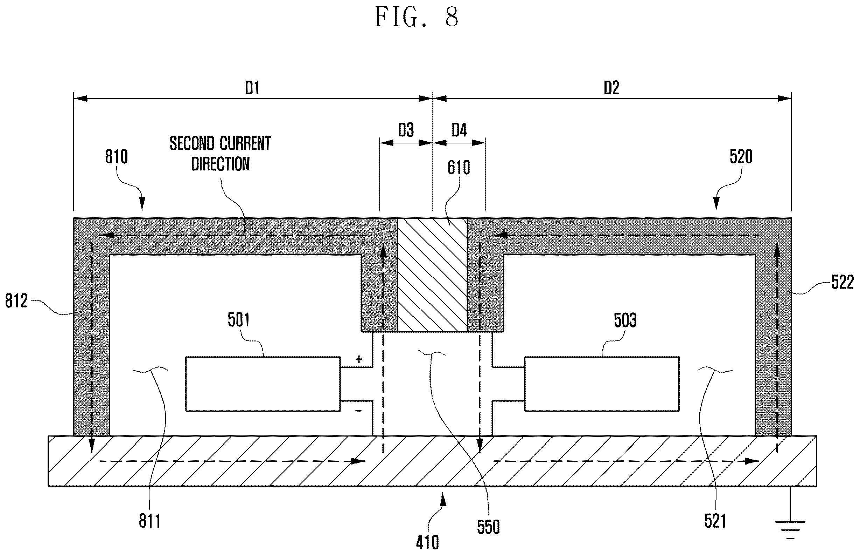

FIG. 8 is a schematic diagram of a side member 203 and a first support member 410 of an electronic device 101 according to an embodiment of the disclosure.

The difference between FIG. 8 and FIG. 6A will be described below based on the insulation member 610.

Referring to FIG. 8, the point at which the NFC circuit 501 is connected to the sixth metal frame 810 may be located at a third distance D3 from the insulation member 610. The point at which the reactive load circuit 503 is connected to the second metal frame 520 may be located at a fourth distance D4 from the insulation member 610.

The sixth metal frame 810 to which the NFC circuit 501 in FIG. 8 is connected may be closer to the insulation member 610 than the first metal frame 510 to which the NFC circuit 501 in FIG. 6A is connected.

In an embodiment, the sixth metal frame 810 may be spaced apart from the second metal frame 520 by a first segment 550. The insulation member 610 may be disposed in the first segment 550. The insulation member 610 may be a dielectric.

In an embodiment, the first support member 410 may include a fourth slot 811 and a second slot 521. The fourth slot 811 may correspond, at least in part, to the shape of the electronic component disposed on the first substrate assembly 440.

In an embodiment, at least a portion of the sixth metal frame 810 may be electrically and physically connected to the first support member 410. For example, the sixth metal frame 810 may be electrically and physically connected to the first support member 410 via a fourth connection member 812.

In an embodiment, when the first support member 410 is manufactured, the sixth metal frame 810, the fourth slot 811, the fourth connection member 812, and the first support member 410 may be formed integrally.

In an embodiment, the sixth metal frame 810 may be connected to the NFC circuit 501. The sixth metal frame 810 may be connected to the feeding line of the NFC circuit 501. The NFC circuit 501 may be connected to the sixth metal frame 810 via the feeding line. The NFC circuit 501 may be connected to the first support member 410 via the ground line.

In an embodiment, the current or signal transmitted through the feeding line of the NFC circuit 501 may flow to the sixth metal frame 810, the fourth connection member 812, and the first support member 410.

In an embodiment, the NFC circuit 501 may form a closed circuit with the sixth metal frame 810, the fourth connection member 812, and the first support member 410.

In an embodiment, the second metal frame 520 may be spaced apart from the sixth metal frame 810 by the first segment 550.

In an embodiment, the fourth slot 821 may correspond, at least in part, to the shape of the electronic component disposed on the first substrate assembly 440.

The second metal frame 520 in FIG. 8 may be substantially the same as the second metal frame 520 in FIG. 6A. However, it is not limited to thereto, and the specific shape may differ.

In an embodiment, the second metal frame 520 may be connected to the reactive load circuit 503. The reactive load circuit 503 may perform an operation such that the current flowing in the second metal frame 520 flows in the same direction (e.g., second current direction) as the current flowing in the sixth metal frame 810.

In an embodiment, the reactive load circuit 503 may include a single capacitor, a single inductor, a single capacitor and a single inductor connected in series, or a single capacitor and a single inductor connected in parallel.

In an embodiment, the reactive load circuit 503 may have at least one power line connected to the second metal frame 520, and at least one power line connected to the first support member 410.

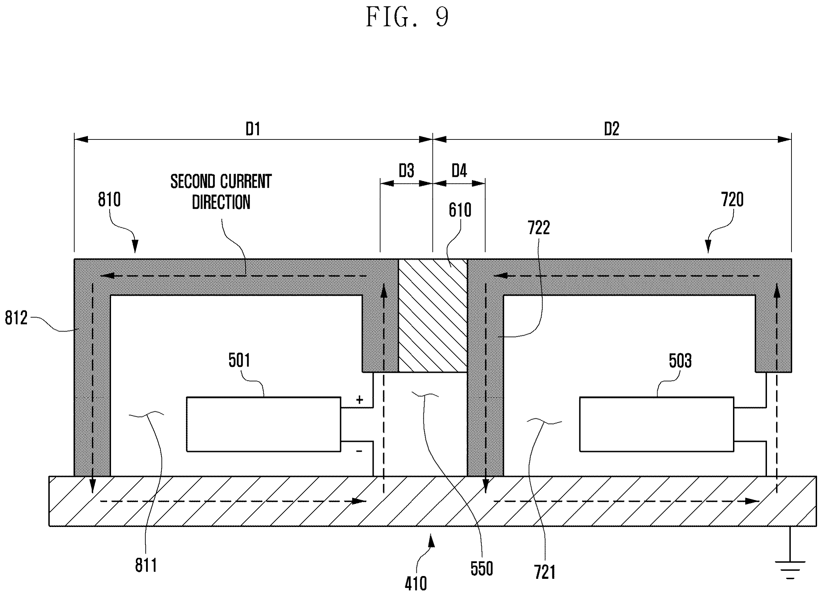

FIG. 9 is a schematic diagram of a side member 203 and a first support member 410 of an electronic device 101 according to an embodiment of the disclosure.

The difference between FIG. 9 and FIG. 6A will be described below based on the insulation member 610.

Referring to FIG. 9, the point at which the NFC circuit 501 is connected to the sixth metal frame 810 may be located at a third distance D3 from the insulation member 610. The point at which the reactive load circuit 503 is connected to the fifth metal frame 720 may be located at a fourth distance D4 from the insulation member 610. The NFC circuit 501 in FIG. 9 may be connected to the sixth metal frame 810 at a point closer to the insulation member 610 than the NFC circuit 501 in FIG. 6A.

The reactive load circuit 503 in FIG. 9 may be connected to a point farther from the insulation member 610 than the reactive load circuit 503 in FIG. 6A.

In an embodiment, the sixth metal frame 810 may be spaced apart from the fifth metal frame 720 by the first segment 550. The insulation member 610 may be disposed in the first segment 550. The insulation member 610 may be a dielectric.

In an embodiment, the first support member 410 may include a fourth slot 811 and a second slot 721. The fourth slot 811 may correspond, at least in part, to the shape of the electronic component disposed on the first substrate assembly 440.

In an embodiment, at least a portion of the sixth metal frame 810 may be electrically and physically connected to the first support member 410. For example, the sixth metal frame 810 may be electrically and physically connected to the first support member 410 via a fourth connection member 812.

In an embodiment, when the first support member 410 is manufactured, the sixth metal frame 810, the fourth slot 811, the fourth connection member 812, and the first support member 410 may be formed integrally.

In an embodiment, the sixth metal frame 810 may be connected to the NFC circuit 501. The sixth metal frame 810 may be connected to the feeding line of the NFC circuit 501. The NFC circuit 501 may be connected to the sixth metal frame 810 via the feeding line. The NFC circuit 501 may be connected to the first support member 410 via the ground line.

In an embodiment, the current or signal transmitted through the feeding line of the NFC circuit 501 may flow to the sixth metal frame 810, the fourth connection member 812, and the first support member 410.

In an embodiment, the NFC circuit 501 may form a closed circuit with the sixth metal frame 810, the fourth connection member 812, and the first support member 410.

In an embodiment, the fifth metal frame 720 may be spaced apart from the sixth metal frame 810 by the first segment 550.

In an embodiment, the fourth slot 811 may correspond, at least in part, to the shape of the electronic component disposed on the first substrate assembly 440.

The fifth metal frame 720 in FIG. 9 may be substantially the same as the fifth metal frame 720 in FIG. 7. However, it is not limited thereto, and the specific shape may differ.

In an embodiment, the fifth metal frame 720 may be connected to the reactive load circuit 503. The reactive load circuit 503 may perform an operation such that the current flowing in the fifth metal frame 720 flows in the same direction (e.g., second current direction) as the current flowing in the sixth metal frame 810.

In an embodiment, the reactive load circuit 503 may include a single capacitor, a single inductor, a single capacitor and a single inductor connected in series, or a single capacitor and a single inductor connected in parallel.

In an embodiment, the reactive load circuit 503 may have at least one power line connected to the fifth metal frame 720 and at least one power line connected to the first support member 410.

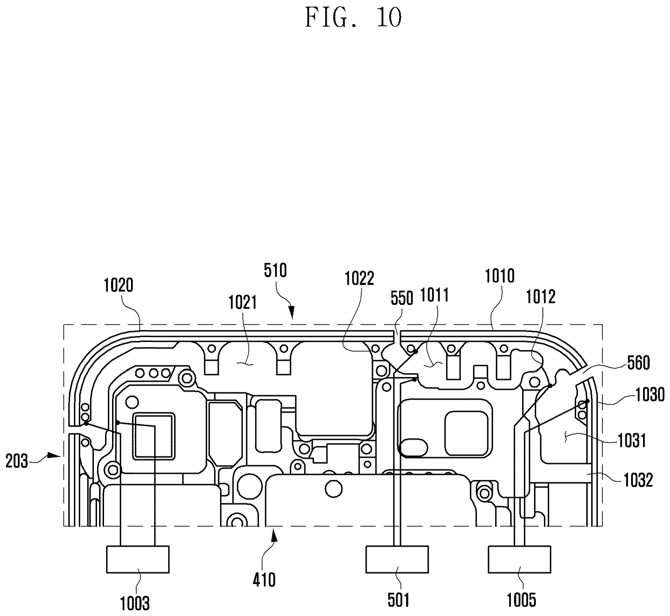

FIG. 10 is a diagram illustrating at least a portion of a side member 203 and a first support member 410 of an electronic device 101 according to an embodiment of the disclosure.

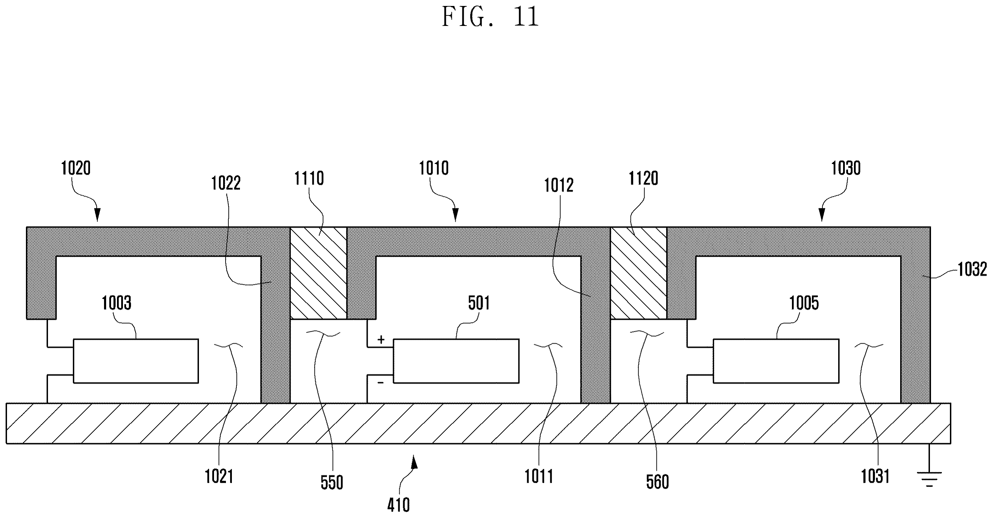

FIG. 11 is a schematic diagram of the side member 203 and the first support member 410 in FIG. 10 according to an embodiment of the disclosure.

Referring to FIGS. 10 and 11, the side member 203 according to an embodiment may include a seventh metal frame 1010, an eighth metal frame 1020, and a ninth metal frame 1030.

In an embodiment, based on a first insulation member 1110 and a second insulation member 1120, the NFC circuit 501 may be connected to the seventh metal frame 1010 via a feeding line within a specified distance from the first insulation member 1110. A first reactive load circuit 1003 may be connected to the eighth metal frame 1020 via a power line at a location far from the feeding point from the location of the eighth metal frame 1020 to which a sixth connection member 1022 is connected. A second reactive load circuit 1005 may be connected to the ninth metal frame 1030 via a power line within a specified distance from the second insulation member 1120.

In an embodiment, the seventh metal frame 1010, the eighth metal frame 1020, and the ninth metal frame 1030 may form the exterior of the electronic device 101. The seventh metal frame 1010, the eighth metal frame 1020, and the ninth metal frame 1030 may be spaced apart from each other. For example, an insulation member may be disposed among the seventh metal frame 1010, the eighth metal frame 1020, and the ninth metal frame 1030. The seventh metal frame 1010, the eighth metal frame 1020, and the ninth metal frame 1030 may be used as antennas of the electronic device 101. The seventh metal frame 1010, the eighth metal frame 1020, and the ninth metal frame 1030 may be connected to a power supply member, a communication circuit, a reactive load, and/or a ground.

In an embodiment, the seventh metal frame 1010 may be spaced apart from the eighth metal frame 1020 by a first segment 550. The seventh metal frame 1010 may be spaced apart from the ninth metal frame 1030 by a second segment 560. For example, the first insulation member 1110 may be disposed between the seventh metal frame 1010 and the eighth metal frame 1020. For example, the second insulation member 1120 may be disposed between the seventh metal frame 1010 and the ninth metal frame 1030.

In an embodiment, the first support member 410 may include a fifth slot 1011, a sixth slot 1021, and a seventh slot 1031. For example, the fifth slot 1011, the sixth slot 1021, and the seventh slot 1031 may correspond, at least in part, to the shape of an electronic component disposed on the first substrate assembly 440.

In an embodiment, at least a portion of the seventh metal frame 1010 may be electrically and physically connected to the first support member 410. For example, the seventh metal frame 1010 may be electrically and physically connected to the first support member 410 via a fifth connection member 1012.

In an embodiment, when the first support member 410 is manufactured, the seventh metal frame 1010, the fifth slot 1011, the fifth connection member 1012, and the first support member 410 may be formed integrally.

In an embodiment, the seventh metal frame 1010 may be connected to the NFC circuit 501. The seventh metal frame 1010 may be connected to the feeding line of the NFC circuit 501. The NFC circuit 501 may be connected to the seventh metal frame 1010 through the feeding line. The NFC circuit 501 may be connected to the first support member 410 through the ground line.

In an embodiment, the current or signal transmitted through a feeding line of the NFC circuit 501 may flow to the seventh metal frame 1010, the fifth connection member 1012, and the first support member 410.

In an embodiment, the NFC circuit 501 may form a closed loop with the seventh metal frame 1010, the fifth connection member 1012, and the first support member 410.

In an embodiment, the eighth metal frame 1020 may be spaced apart from the seventh metal frame 1010 by a specified distance.

In an embodiment, the sixth slot 1021 may correspond, at least in part, to the shape of an electronic component disposed on the first substrate assembly 440.

In an embodiment, at least a portion of the eighth metal frame 1020 may be electrically and physically connected to the first support member 410. For example, the eighth metal frame 1020 may be electrically and physically connected to the first support member 410 via the sixth connection member 1022.

In an embodiment, when the first support member 410 is manufactured, the eighth metal frame 1020, the sixth slot 1021, the sixth connection member 1022, and the first support member 410 may be formed integrally.

In an embodiment, the eighth metal frame 1020 may be connected to the first reactive load circuit 1003. The first reactive load circuit 1003 may perform an operation such that the current flowing in the eighth metal frame 1020 flows in the same direction as the current flowing in the seventh metal frame 1010.

In an embodiment, the first reactive load circuit 1003 may include a single capacitor, a single inductor, a single capacitor and a single inductor connected in series, or a single capacitor and a single inductor connected in parallel.

In an embodiment, the first reactive load circuit 1003 may have at least one power line connected to the eighth metal frame 1020 and at least one power line connected to the first support member 410.

In an embodiment, the first reactive load circuit 1003 may act as a filter for the current or signal flowing through the NFC circuit 501.

In an embodiment, the current or signal generated by the seventh metal frame 1010 may be reconstructed by the first reactive load circuit 1003 and may flow to the eighth metal frame 1020. The first reactive load circuit 1003 may be connected to the eighth metal frame 1020, and coupling may occur between the seventh metal frame 1010 and the eighth metal frame 1020.

In an embodiment, the first reactive load circuit 1003 may form a closed loop with the eighth metal frame 1020, the sixth connection member 1022, and the first support member 410.

In an embodiment, the ninth metal frame 1030 may be spaced apart from the seventh metal frame 1010 by a specified distance.

In an embodiment, the seventh slot 1031 may correspond, at least in part, to the shape of an electronic component disposed on the first substrate assembly 440.

In an embodiment, at least a portion of the ninth metal frame 1030 may be electrically and physically connected to the first support member 410. For example, the ninth metal frame 1030 may be electrically and physically connected to the first support member 410 via a seventh connection member 1032.

In an embodiment, when the first support member 410 is manufactured, the ninth metal frame 1030, the seventh slot 1031, the seventh connection member 1032, and the first support member 410 may be formed integrally.

In an embodiment, the ninth metal frame 1030 may be connected to the second reactive load circuit 1005. The second reactive load circuit 1005 may perform an operation such that the current flowing in the ninth metal frame 1030 flows in the same direction as the current flowing in the seventh metal frame 1010.

In an embodiment, the second reactive load circuit 1005 may include a single capacitor, a single inductor, a single capacitor and a single inductor connected in series, or a single capacitor and a single inductor connected in parallel.

In an embodiment, the second reactive load circuit 1005 may have at least one power line connected to the ninth metal frame 1030 and at least one power line connected to the first support member 410.

In an embodiment, the second reactive load circuit 1005 may act as a filter for the current or signal flowing through the NFC circuit 501.

In an embodiment, the current or signal generated by the seventh metal frame 1010 may be reconstructed by the second reactive load circuit 1005 and may flow to the ninth metal frame 1030. The second reactive load circuit 1005 may be connected to the ninth metal frame 1030, and coupling may occur between the seventh metal frame 1010 and the ninth metal frame 1030.

In an embodiment, the first reactive load circuit 1003 may form a closed loop with the ninth metal frame 1030, the seventh connection member 1032, and the first support member 410.

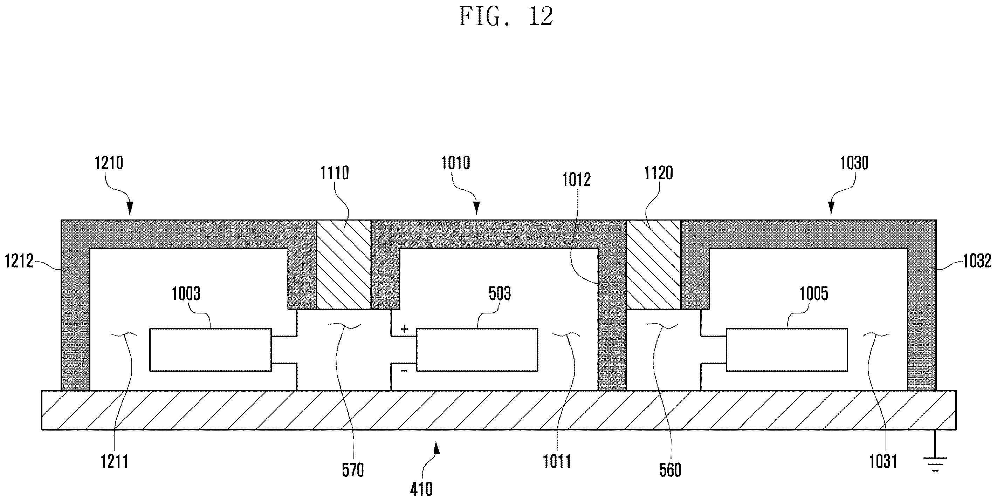

FIG. 12 is a schematic diagram of a side member 203 and a first support member 410 of an electronic device 101 according to an embodiment of the disclosure.

Referring to FIG. 12, the side member 203 may include a seventh metal frame 1010, a ninth metal frame 1030, and a tenth metal frame 1210.

The first reactive load circuit 1003 in FIG. 12 may be disposed closer to the feeding point of the NFC circuit 503 than the first reactive load circuit 1003 in FIG. 11.

In an embodiment, based on the first insulation member 1110 and the second insulation member 1120, the NFC circuit 503 may be connected to the seventh metal frame 1010 via a feeding line so as to be adjacent to the first insulation member 1110. The first reactive load circuit 1003 may be connected to the tenth metal frame 1210 via a power line so as to be closer to the first insulation member 1110 than an eighth connection member 1212. The second reactive load circuit 1005 may be connected to the ninth metal frame 1030 via a power line so as to be closer to the second insulation member 1120 than the seventh connection member 1032.

In an embodiment, based on the first insulation member 1110 and the second insulation member 1120, the NFC circuit 503 may be connected to the seventh metal frame 1010 via a feeding line within a first distance from the first insulation member 1110. The first reactive load circuit 1003 may be connected to the tenth metal frame 1210 via a power line within a second distance from the first insulation member 1110. The second reactive load circuit 1005 may be connected to the ninth metal frame 1030 via a power line within a third distance from the second insulation member 1120. The first distance, the second distance, and the third distance may be different from each other. The first distance, the second distance, and the third distance may be the same.

In an embodiment, the seventh metal frame 1010, the ninth metal frame 1030, and the tenth metal frame 1210 may form the exterior of the electronic device 101. The seventh metal frame 1010, the ninth metal frame 1030, and the tenth metal frame 1210 may be spaced apart from each other. An insulation member may be disposed among the seventh metal frame 1010, the ninth metal frame 1030, and the tenth metal frame 1210. The seventh metal frame 1010, the ninth metal frame 1030, and the tenth metal frame 1210 may be used as antennas of the electronic device 101. The seventh metal frame 1010, the ninth metal frame 1030, and the tenth metal frame 1210 may be connected to a power supply member, a communication circuit, a reactive load, and/or a ground.

In an embodiment, the seventh metal frame 1010 may be spaced apart from the tenth metal frame 1210 by a third segment 570. The seventh metal frame 1010 may be spaced apart from the ninth metal frame 1030 by a second segment 560. The first insulation member 1110 may be disposed between the seventh metal frame 1010 and the tenth metal frame 1210. The second insulation member 1120 may be disposed between the seventh metal frame 1010 and the ninth metal frame 1030. The first insulation member 1110 and the second insulation member 1120 may be dielectrics.

In an embodiment, the first support member 410 may include a fifth slot 1011, a seventh slot 1031, and an eighth slot 1211. For example, the fifth slot 1011, the seventh slot 1031, and the eighth slot 1211 may correspond, at least in part, to the shape of an electronic component disposed on the first substrate assembly 440.

In an embodiment, at least a portion of the seventh metal frame 1010 may be electrically and physically connected to the first support member 410. For example, the seventh metal frame 1010 may be electrically and physically connected to the first support member 410 via the fifth connection member 1012.

In an embodiment, when the first support member 410 is manufactured, the seventh metal frame 1010, the fifth slot 1011, the fifth connection member 1012, and the first support member 410 may be formed integrally.

In an embodiment, the seventh metal frame 1010 may be connected to the NFC circuit 501. The seventh metal frame 1010 may be connected to the feeding line of the NFC circuit 501. The NFC circuit 501 may be connected to the seventh metal frame 1010 via the feeding line. The NFC circuit 501 may be connected to the first support member 410 via the ground line.

In an embodiment, the current or signal transmitted through a feeding line of the NFC circuit 501 may flow to the seventh metal frame 1010, the fifth connection member 1012, and the first support member 410.

In an embodiment, the NFC circuit 501 may form a closed loop with the seventh metal frame 1010, the fifth connection member 1012, and the first support member 410.

In an embodiment, the tenth metal frame 1210 may be spaced apart from the seventh metal frame 1010.

In an embodiment, the eighth slot 1211 may correspond, at least in part, to the shape of an electronic component disposed on the first substrate assembly 440.

In an embodiment, at least a portion of the tenth metal frame 1210 may be electrically and physically connected to the first support member 410. For example, the tenth metal frame 1210 may be electrically and physically connected to the first support member 410 via the eighth connection member 1212.

In an embodiment, when the first support member 410 is manufactured, the tenth metal frame 1210, the eighth slot 1211, the eighth connection member 1212, and the first support member 410 may be formed integrally.

In an embodiment, the tenth metal frame 1210 may be connected to the first reactive load circuit 1003. The first reactive load circuit 1003 may perform an operation such that the current flowing in the tenth metal frame 1210 flows in the same direction as the current flowing in the seventh metal frame 1010.

In an embodiment, the first reactive load circuit 1003 may include a single capacitor, a single inductor, a single capacitor and a single inductor connected in series, or a single capacitor and a single inductor connected in parallel.

In an embodiment, the first reactive load circuit 1003 may have at least one power line connected to the tenth metal frame 1210 and at least one power line connected to the first support member 410.

In an embodiment, the first reactive load circuit 1003 may act as a filter for the current or signal flowing through the NFC circuit 501.

In an embodiment, the current or signal transmitted through at least one power line of the first reactive load circuit 1003 may flow to the tenth metal frame 1210, the eighth connection member 1212, and the first support member 410.

In an embodiment, the first reactive load circuit 1003 may form a closed loop with the tenth metal frame 1210, the eighth connection member 1212, and the first support member 410.

In an embodiment, the ninth metal frame 1030 may be spaced apart from the seventh metal frame 1010 by a specified distance.

In an embodiment, the seventh slot 1031 may correspond, at least in part, to the shape of an electronic component disposed on the first substrate assembly 440.

In an embodiment, at least a portion of the ninth metal frame 1030 may be electrically and physically connected to the first support member 410. For example, the ninth metal frame 1030 may be electrically and physically connected to the first support member 410 via the seventh connection member 1032.

In an embodiment, when the first support member 410 is manufactured, the ninth metal frame 1030, the seventh slot 1031, the seventh connection member 1032, and the first support member 410 may be formed integrally.

In an embodiment, the ninth metal frame 1030 may be connected to the second reactive load circuit 1005. The second reactive load circuit 1005 may perform an operation such that the current flowing in the ninth metal frame 1030 flows in the same direction as the current flowing in the seventh metal frame 1010.

In an embodiment, the second reactive load circuit 1005 may include a single capacitor, a single inductor, a single capacitor and a single inductor connected in series, or a single capacitor and a single inductor connected in parallel.

In an embodiment, the second reactive load circuit 1005 may have at least one power line connected to the ninth metal frame 1030 and at least one power line connected to the first support member 410.

In an embodiment, the second reactive load circuit 1005 may act as a filter for the current or signal flowing through the NFC circuit 501.

In an embodiment, the current or signal transmitted through at least one power line of the second reactive load circuit 1005 may flow to the ninth metal frame 1030, the seventh connection member 1032, and the first support member 410.

In an embodiment, the second reactive load circuit 1005 may form a closed loop with the ninth metal frame 1030, the seventh connection member 1032, and the first support member 410.

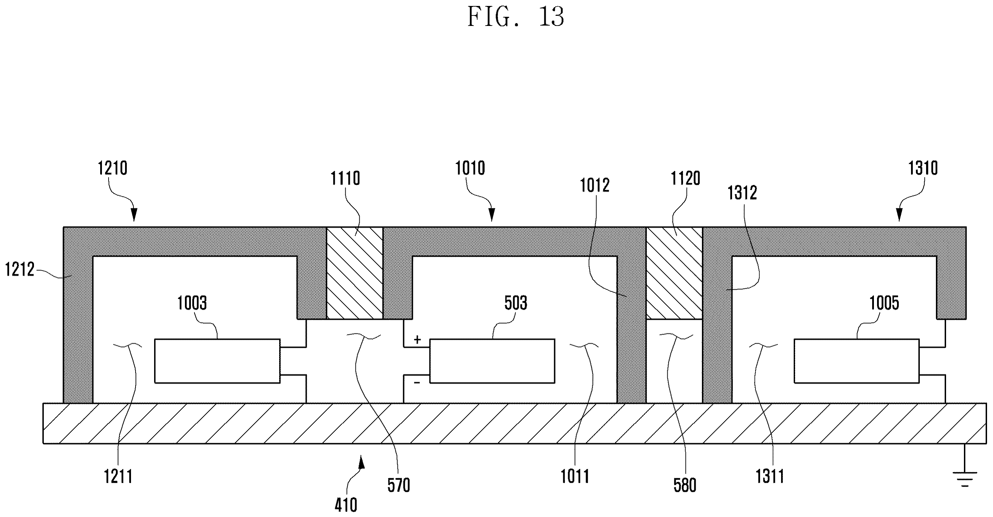

FIG. 13 is a schematic diagram of a side member 203 and a first support member 410 of an electronic device 101 according to an embodiment of the disclosure.

Referring to FIG. 13, the side member 203 may include a seventh metal frame 1010, a tenth metal frame 1210, and an eleventh metal frame 1310.

The second reactive load circuit 1005 in FIG. 13 may be disposed further from the second insulation member 1120 than the second reactive load circuit 1005 in FIG. 12.

In an embodiment, based on the first insulation member 1110 and the second insulation member 1120, the NFC circuit 503 may be connected to the seventh metal frame 1010 via a feeding line at a position closer to the first insulation member 1110 than the fifth connection member 1012. The first reactive load circuit 1003 may be connected to the tenth metal frame 1210 via a power line at a position closer to the first insulation member 1110 than the eighth connection member 1212. The second reactive load circuit 1005 may be connected to the eleventh metal frame 1310 at a position further from the second insulation member 1120 than the ninth connection member 1312.

In an embodiment, the seventh metal frame 1010, the tenth metal frame 1210, and the eleventh metal frame 1310 may form the exterior of the electronic device 101. The seventh metal frame 1010, the tenth metal frame 1210, and the eleventh metal frame 1310 may be spaced apart from each other. For example, an insulation member may be disposed among the seventh metal frame 1010, the tenth metal frame 1210, and the eleventh metal frame 1310. At least a portion of the seventh metal frame 1010, the tenth metal frame 1210, and the eleventh metal frame 1310 may be used as antennas of the electronic device 101. For example, the seventh metal frame 1010, the tenth metal frame 1210, and the eleventh metal frame 1310 may be connected to a power supply member, a communication circuit, a reactive load, and/or a ground.

In an embodiment, the seventh metal frame 1010 may be spaced apart from the tenth metal frame 1210 by a third segment 570. The seventh metal frame 1010 may be spaced apart from the eleventh metal frame 1310 by a fourth segment 580. Insulation members 1110 and 1120 may be disposed in the segments. The insulation members 1110 and 1120 may be dielectrics.

In an embodiment, the first support member 410 may include a fifth slot 1011, an eighth slot 1211, and a ninth slot 1311. For example, the fifth slot 1011, the eighth slot 1211, and the ninth slot 1311 may correspond, at least in part, to the shape of the electronic component disposed on the first substrate assembly 440.

In an embodiment, at least a portion of the seventh metal frame 1010 may be electrically and physically connected to the first support member 410. For example, the seventh metal frame 1010 may be electrically and physically connected to the first support member 410 via the fifth connection member 1012.

In an embodiment, when the first support member 410 is manufactured, the seventh metal frame 1010, the fifth slot 1011, the fifth connection member 1012, and the first support member 410 may be formed integrally.

In an embodiment, the seventh metal frame 1010 may be connected to the NFC circuit 501. The seventh metal frame 1010 may be connected to the feeding line of the NFC circuit 501. The NFC circuit 501 may be connected to the seventh metal frame 1010 via the feeding line. The NFC circuit 501 may be connected to the first support member 410 via the ground line.

In an embodiment, the current or signal transmitted through the feeding line of the NFC circuit 501 may flow to the seventh metal frame 1010, the fifth connection member 1012, and the first support member 410.

In an embodiment, the NFC circuit 501 may form a closed loop with the seventh metal frame 1010, the fifth connection member 1012, and the first support member 410.

In an embodiment, the tenth metal frame 1210 may be spaced apart from the seventh metal frame 1010 by a specified distance.

In an embodiment, the eighth slot 1211 may correspond, at least in part, to the shape of an electronic component disposed on the first substrate assembly 440.

In an embodiment, at least a portion of the tenth metal frame 1210 may be electrically and physically connected to the first support member 410. For example, the tenth metal frame 1210 may be electrically and physically connected to the first support member 410 via the eighth connection member 1212.

In an embodiment, when the first support member 410 is manufactured, the tenth metal frame 1210, the eighth slot 1211, the eighth connection member 1212, and the first support member 410 may be formed integrally.

In an embodiment, the tenth metal frame 1210 may be connected to the first reactive load circuit 1003. The first reactive load circuit 1003 may perform an operation such that the current flowing in the tenth metal frame 1210 flows in the same direction as the current flowing in the seventh metal frame 1010.

In an embodiment, the first reactive load circuit 1003 may include a single capacitor, a single inductor, a single capacitor and a single inductor connected in series, or a single capacitor and a single inductor connected in parallel.

In an embodiment, the first reactive load circuit 1003 may have at least one power line connected to the tenth metal frame 1210 and at least one power line connected to the first support member 410.

In an embodiment, the first reactive load circuit 1003 may act as a filter for the current or signal flowing through the NFC circuit 501.

In an embodiment, the current or signal generated by the seventh metal frame 1010 may be reconstructed by the first reactive load circuit 1003 and may flow to the tenth metal frame 1210. The first reactive load circuit 1003 may be connected to the tenth metal frame 1210, and coupling may occur between the seventh metal frame 1010 and the tenth metal frame 1210.

In an embodiment, the first reactive load circuit 1003 may form a closed loop with the tenth metal frame 1210, the eighth connection member 1212, and the first support member 410.

In an embodiment, the eleventh metal frame 1310 may be spaced apart from the seventh metal frame 1010 by a specified distance.

In an embodiment, the ninth slot 1311 may correspond, at least in part, to the shape of an electronic component disposed on the first substrate assembly 440.

In an embodiment, at least a portion of the eleventh metal frame 1310 may be electrically and physically connected to the first support member 410. For example, the eleventh metal frame 1310 may be electrically and physically connected to the first support member 410 via the ninth connection member 1312.

In an embodiment, when the first support member 410 is manufactured, the eleventh metal frame 1310, the ninth slot 1311, the ninth connection member 1312, and the first support member 410 may be formed integrally.

In an embodiment, the eleventh metal frame 1310 may be connected to the second reactive load circuit 1005. The second reactive load circuit 1005 may perform an operation such that the current flowing in the eleventh metal frame 1310 flows in the same direction as the current flowing in the seventh metal frame 1010.

In an embodiment, the second reactive load circuit 1005 may include a single capacitor, a single inductor, a single capacitor and a single inductor connected in series, or a single capacitor and a single inductor connected in parallel.

In an embodiment, the second reactive load circuit 1005 may have at least one power line connected to the eleventh metal frame 1310 and at least one power line connected to the first support member 410.

In an embodiment, the second reactive load circuit 1005 may act as a filter for the current or signal flowing through the NFC circuit 501.

In an embodiment, the current or signal generated by the seventh metal frame 1010 may be reconstructed by the second reactive load circuit 1005 and may flow to the eleventh metal frame 1310. The second reactive load circuit 1005 may be connected to the eleventh metal frame 1310, and coupling may occur between the seventh metal frame 1010 and the eleventh metal frame 1310.

In an embodiment, the second reactive load circuit 1005 may form a closed loop with the eleventh metal frame 1310, the ninth connection member 1312, and the first support member 410.

An electronic device 101 including an antenna according to an embodiment may include a housing including a first plate 201 facing a first direction, a second plate facing a second direction opposite to the first direction, and a side member 203 surrounding at least a portion of a space between the first plate 201 and the second plate 202.

The electronic device 101 including an antenna according to an embodiment may include a display 301 disposed inside the housing and exposed through the first plate 201, a printed circuit board disposed inside the housing and disposed between the display 301 and the second plate, an NFC circuit 501 disposed inside the housing and disposed on the printed circuit board; and a processor 120.

The side member 203 according to an embodiment may include a first metal frame 510, a second metal frame sharing a ground with the first metal frame 510, a first insulation member disposed between the first metal frame 510 and the second metal frame 520, and a support member 410 configured to form a first loop with the first metal frame 510, form a second loop with the second metal frame, and support the display 301 and the printed circuit board.

The NFC circuit 501 according to an embodiment may be electrically connected to the first loop, and the second loop may be electrically connected to a first reactive load circuit (e.g., the reactive load circuit 503).

The first metal frame 510 according to an embodiment may be spaced apart from the second metal frame, be connected to the support member 410 via a first connection member, and form a first slot with the support member 410.

The second metal frame 520 according to an embodiment may be spaced apart from the first metal frame 510, be connected to the support member 410 via a second connection member, and form a second slot with the support member 410.

The NFC circuit 501 according to an embodiment may have a feeding line connected to the first metal frame 510, and a ground line connected to the support member 410.

The first reactive load circuit (e.g., the reactive load circuit 503) according to an embodiment may have at least one power line connected to the second metal frame 520, and at least one power line connected to the support member 410.

The first reactive load circuit (e.g., the reactive load circuit 503) according to an embodiment may include a single capacitor, a single inductor, a plurality of capacitors, a plurality of inductors, a single or plurality of capacitors and a single or plurality of inductors connected in series, or a single or plurality of capacitors and a single or plurality of inductors connected in parallel.

The NFC circuit 501 according to an embodiment may be connected to the first metal frame 510 at a point of a first distance from the first insulation member (e.g., the insulation member 610).

The first reactive load circuit (e.g., the reactive load circuit 503) according to an embodiment may be connected to the second metal frame 520 at a point of a second distance from the first insulation member (e.g., the insulation member 610).

The first distance according to an embodiment may be longer than a specified length, and the second distance may be shorter than or equal to the specified length.

The NFC circuit 501 according to an embodiment may be connected to the first metal frame 510 at a point of a first distance from the first insulation member (e.g., the insulation member 610).

The first reactive load circuit (e.g., the reactive load circuit 503) according to an embodiment may be connected to the second metal frame at a point of a third distance from the first insulation member.

In the electronic device 101 according to an embodiment, the first distance and the third distance may be longer than a specified length.

The NFC circuit 501 according to an embodiment may be connected to the first metal frame 510 at a point of a fourth distance from the first insulation member.

The first reactive load circuit (e.g., the reactive load circuit 503) according to an embodiment may be connected to the second metal frame at a point of a second distance from the first insulation member.

The second distance and the fourth distance according to an embodiment may be shorter than or equal to a specified length.

The NFC circuit 501 according to an embodiment may be connected to the first metal frame 510 at a point of a fourth distance from the first insulation member.

The first reactive load circuit (e.g., the reactive load circuit 503) according to an embodiment may be connected to the second metal frame at a point of a third distance from the first insulation member.

The fourth distance according to an embodiment may be shorter than or equal to a specified length, and the third distance may be longer than the specified length.

The side member 203 according to an embodiment may further include a third metal frame that shares the ground with the first metal frame 510.

The electronic device 101 including an antenna according to an embodiment may include a second insulation member disposed between the first metal frame 510 and the third metal frame, and a second reactive load circuit having a feeding line connected to the third metal frame and a ground line connected to the support member 410.

The NFC circuit 501 according to an embodiment may be connected to the first metal frame 510 via a feeding line within a specified distance from the first insulation member.

The first reactive load circuit according to an embodiment may be connected to the second metal frame via a power line beyond the specified distance from the first insulation member.

The second reactive load circuit according to an embodiment may be connected to the third metal frame via a power line within a specified distance from the second insulation member.

The NFC circuit 501 according to an embodiment may be connected to the first metal frame 510 via a feeding line within a specified distance from the first insulation member.

The first reactive load circuit according to an embodiment may be connected to the second metal frame via a power line within the specified distance from the first insulation member.

The second reactive load circuit according to an embodiment may be connected to the third metal frame via a power line within a specified distance from the second insulation member.

The NFC circuit 501 according to an embodiment may be connected to the first metal frame 510 via a feeding line within a specified distance from the first insulation member.

The first reactive load circuit according to an embodiment may be connected to the second metal frame via a power line within the specified distance from the first insulation member.

The second reactive load circuit according to an embodiment may be connected to the third metal frame via a power line beyond a specified distance from the second insulation member.

The third metal frame according to an embodiment may be spaced apart from the first metal frame 510 by the specified distance, may be connected to the support member 410 via a third connection member, and may form a third slot with the support member 410.

The second reactive load circuit according to an embodiment may have at least one power line connected to the third metal frame, and at least one power line connected to the support member 410.

The second reactive load circuit according to an embodiment may include a single capacitor, a single inductor, a plurality of capacitors, a plurality of inductors, a single or plurality of capacitors and a single or plurality of inductors connected in series, or a single or plurality of capacitors and a single or plurality of inductors connected in parallel. The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store ^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising an antenna, the electronic device comprising:
a housing comprising a first plate facing a first direction, a second plate facing a second direction opposite to the first direction, and a side member surrounding at least a portion of a space between the first plate and the second plate;
a display disposed inside the housing and exposed through the first plate;
a printed circuit board disposed inside the housing and disposed between the display and the second plate;
an NFC circuit disposed inside the housing and disposed on the printed circuit board; and
a processor,
wherein the side member comprises:
a first metal frame;
a second metal frame sharing a ground with the first metal frame;
a first insulation member disposed between the first metal frame and the second metal frame; and
a support member configured to form a first loop with the first metal frame, form a second loop with the second metal frame, and support the display and the printed circuit board, and
wherein the NFC circuit is electrically connected to the first loop, and the second loop is electrically connected to the first reactive load circuit.

2. The electronic device of claim 1,
wherein the first metal frame is spaced apart from the second metal frame, is connected to the support member via a first connection member, and forms a first slot with the support member, and
wherein the second metal frame is spaced apart from the first metal frame, is connected to the support member via a second connection member, and forms a second slot with the support member.

3. The electronic device of claim 1,
wherein the NFC circuit has
a feeding line connected to the first metal frame, and
a ground line connected to the support member.

4. The electronic device of claim 1,
wherein the first reactive load circuit has
at least one power line connected to the second metal frame, and
at least one power line connected to the support member.

5. The electronic device of claim 1,
wherein the first reactive load circuit comprises
a single capacitor, a single inductor, a plurality of capacitors, a plurality of inductors, a single or plurality of capacitors and a single or plurality of inductors connected in series, or a single or plurality of capacitors and a single or plurality of inductors connected in parallel.

6. The electronic device of claim 1,
wherein the NFC circuit is connected to the first metal frame at a point of a first distance from the first insulation member,
wherein the first reactive load circuit is connected to the second metal frame at a point of a second distance from the first insulation member, and
wherein the first distance is longer than a specified length, and the second distance is shorter than or equal to the specified length.

7. The electronic device of claim 1,
wherein the NFC circuit is connected to the first metal frame at a point of a first distance from the first insulation member,
wherein the first reactive load circuit is connected to the second metal frame at a point of a third distance from the first insulation member, and
wherein the first distance and the third distance are longer than a specified length.

8. The electronic device of claim 1,
wherein the NFC circuit is connected to the first metal frame at a point of a fourth distance from the first insulation member,
wherein the first reactive load circuit is connected to the second metal frame at a point of a second distance from the first insulation member, and
wherein the second distance and the fourth distance are shorter than or equal to a specified length.

9. The electronic device of claim 1,
wherein the NFC circuit is connected to the first metal frame at a point of a fourth distance from the first insulation member,
wherein the first reactive load circuit is connected to the second metal frame at a point of a third distance from the first insulation member, and
wherein the fourth distance is shorter than or equal to a specified length, and the third distance is longer than the specified length.

10. The electronic device of claim 1,
wherein the side member further comprises a third metal frame that shares the ground with the first metal frame,
wherein the electronic device comprises:
a second insulation member disposed between the first metal frame and the third metal frame; and
a second reactive load circuit having a feeding line connected to the third metal frame and a ground line connected to the support member, and
wherein the third metal frame is spaced apart from the first metal frame by the specified distance, is connected to the support member via a third connection member, and forms a third slot with the support member.

11. The electronic device of claim 10,
wherein the NFC circuit is connected to the first metal frame via a feeding line within a specified distance from the first insulation member,
wherein the first reactive load circuit is connected to the second metal frame via a power line beyond the specified distance from the first insulation member, and
wherein the second reactive load circuit is connected to the third metal frame via a power line within a specified distance from the second insulation member.

12. The electronic device of claim 10,
wherein the NFC circuit is connected to the first metal frame via a feeding line within a specified distance from the first insulation member,
wherein the first reactive load circuit is connected to the second metal frame via a power line within the specified distance from the first insulation member, and
wherein the second reactive load circuit is connected to the third metal frame via a power line within a specified distance from the second insulation member.

13. The electronic device of claim 10,
wherein the NFC circuit is connected to the first metal frame via a feeding line within a specified distance from the first insulation member,
wherein the first reactive load circuit is connected to the second metal frame via a power line within the specified distance from the first insulation member, and
wherein the second reactive load circuit is connected to the third metal frame via a power line beyond a specified distance from the second insulation member.

14. The electronic device of claim 10,
wherein the second reactive load circuit has
at least one power line connected to the third metal frame, and
at least one power line connected to the support member.

15. The electronic device of claim 10,
wherein the second reactive load circuit comprises
a single capacitor, a single inductor, a plurality of capacitors, a plurality of inductors, a single or plurality of capacitors and a single or plurality of inductors connected in series, or a single or plurality of capacitors and a single or plurality of inductors connected in parallel.
